# EUROPEAN PATENT SPECIFICATION

(11) **EP 2 549 629 B1**
(45) Date of publication and mention of the grant of the patent: **15.05.2019**
(21) Application number: 12173585.6
(22) Date of filing: 26.06.2012
(51) Int. Cl.: H02K 9/14, H02K 5/08, H02K 5/24, H02K 11/33, H02K 5/20, H02K 5/18

(54) **Rotating electrical machine**
Drehende elektrische Maschine
Machine électrique tournante

(30) Priority: 22.07.2011 JP 2011160437
(43) Date of publication of application: 23.01.2013
(73) Proprietor: Hitachi Industrial Equipment Systems Co., Ltd., Tokyo (JP)
(72) Inventor: SAITO, Kenichi, Chiyoda-ku,, Tokyo 100-8220, (JP); KOBAYASHI, Takashi, Chiyoda-ku,, Tokyo 100-8220, (JP); SUZUKI, Toshifumi, Chiyoda-ku,, Tokyo 100-8220, (JP); SUZUKI, Norinaga, Chiyoda-ku,, Tokyo 100-8220, (JP); SANO, Masahiro, Chiyda-ku,, Tokyo 100-8220, (JP); TASHIMA, Kiyomi, Chiyoda-ku,, Tokyo 100-8220, (JP)
(74) Representative: Mewburn Ellis LLP

(56) References cited:
- US-A- 5 311 090
- US-A- 6 093 990

## Description

The present invention relates to a rotating electrical machine.

The following configurations are known as a background technology of the present invention. Patent Document 1 discloses a rotating electrical machine with a built-in controller configured by integrating a main body of the rotating electrical machine and various control devices. Further, Patent Document 2 discloses a rotating electrical machine configured in such a manner that an inverter is fixed on a side of the rotating electrical machine, and a cooling fan is fitted at one end of the a rotating shaft of the rotating electrical machine to introduce external air into a cooling fan of the inverter for efficiently cooling the inverter, and a pump apparatus.

US6093990 discloses a form fitting motor cover for Totally Enclosed Fan Cooled (TEFC) motors having a cylindrical body with a periphery of 255 degrees which when flexed outwardly can be placed over a motor casing and upon release will cause said cover to adhere to, and form around said motor casing to keep debris, splash and spray off of motor casing and improve efficiency of air flowing between the cover and the motor cooling fins. The motor cover has at either or both ends of the motor an attachable covering end plate and a conduit box cover which can be attached to the cover by any suitable method.

### Related Art Literature

### Patent Documents

Patent Document 1: Japanese Unexamined Patent Application Publication No. Hei11(1999)-27903
Patent Document 2: Japanese Unexamined Patent Application Publication No. 2009-278807

An apparatus such as a pump solely installed outdoors and used under direct sun shine is often installed adjacent to a rotating electrical machine for driving thereof. Problems such as those mentioned below exist with a rotating electrical machine which comprises, as all-in-one, a main body of the rotating electrical machine, an inverter for supplying drive current to the rotating electrical machine, a microcomputer for configuring internal and/or external cable/wireless interfaces, and a control substrate (hereinafter, referred to as "control & I/F substrate) for performing various operation controls, as well as a noise filter and a DC reactor having an anti-surge circuit.

One of the problems is a heat. The rotating electrical machine, which is heated when driving, needs to be cooled down. For this purpose, the rotating electrical machine is provided with a cooling fan for cooling down the rotating electrical machine by performing heat exchange between air blown by a cooling fan and cold air supplied by cooling fins provided on a cover enclosing a stator. In this manner, the rotating electrical machine can be cooled down by the cooling fan during driving. However, a rotating electrical machine used under direct sun shine has a problem in that heat cannot be sufficiently dissipated when the rotating electrical machine is stopped in spite that cooling is needed.

Further, the above-mentioned conventional technologies have the following problems. Especially among components mounted in a rotating electrical machine with a main body thereof, a power conversion device generates heat from a power switching element (for example, IGBT or the like) forming an inverter. For this reason, when an inverter is mounted inside cylindrical casings stacked on a rotating shaft at one end of the rotating electrical machine as disclosed in Patent Document 1, heat from the inverter (i.e., power switching element thereof) cannot be dissipated to outside in a reliable manner. Further, in a configuration in which part of air flow formed by a cooling fan in the main body of the rotating electrical machine is introduced into cooling fins of the inverter as disclosed in Patent Document 2, it is also difficult to dissipate heat of the inverter to outside in a reliable manner.

Another problem is a noise. A rotating electrical machine controlled by an inverter generates a noise therefrom. To reduce the noise, it is necessary to suppress noise generation itself or provide a soundproofing means. In the former case, changing the wavelength beyond an audible region by changing the carrier frequency or the like can be considered, but it is limited due to other restrictions. Further, in the latter case, improvement of the soundproofing effect by enhancing the shielding effect can be considered, but enhancing the shielding effect results in reducing heat dissipation effect and thereby still causes a heat problem.

As is apparent from embodiments described in detail hereinafter, a preferred aim of the present invention is to provide a rotating electrical machine free of heat and noise problems, which integrally comprises a power control system including an inverter, a drive system including a motor, a circuit substrate configured to connect those devices to each other, a noise filter, and a capacitor.

According to an aspect of the present invention there is provided a rotating electrical machine according to claim 1.

The rotating electrical machine according to the aspect of the present invention may optionally be as specified in any one of claims 2 to 8.

According to the aspect of the present invention, a rotating electrical machine operable under severe environments such as, for example, under direct sun shine and capable of achieving low noise can be provided.

The drawing figures depict one or more implementations in accord with the present teachings, by way of examples only, not by way of limitation. In the figures, like reference numerals refer to the same or similar elements.
Fig. 1 is an external perspective view showing an overall configuration of a rotating electrical machine according to an aspect of the present invention;
Fig. 2 is a developed perspective view of an overall configuration of components of a rotating electrical machine accommodated inside a cover of the rotating electrical machine;
Fig. 3 is a developed perspective view of components accommodated inside the cover of the rotating electrical machine shown in Fig. 2;
Fig. 4 is a partially cut perspective view showing another example of the positional relation between a power conversion device fitted to the housing and a stator (armature);
Fig. 5 is a perspective view showing another example of the core comprising a stator (armature) in the rotating electrical machine;
Fig. 6 is a cross-sectional view showing components inside the cover of the rotating electrical machine; and
Fig. 7 shows results of noise tests on the rotating electrical machine.

In the following detailed description, numerous specific details are set forth by way of examples in order to provide a thorough understanding of the relevant teachings. However, it should be apparent to those skilled in the art that the present teachings may be practiced without such details. In other instances, well known methods, procedures, components, and/or circuitry have been described at a relatively high-level, without detail, in order to avoid unnecessarily obscuring aspects of the present teachings.

Hereinafter, details of embodiments according to the present invention are described with reference to the accompanying drawings.

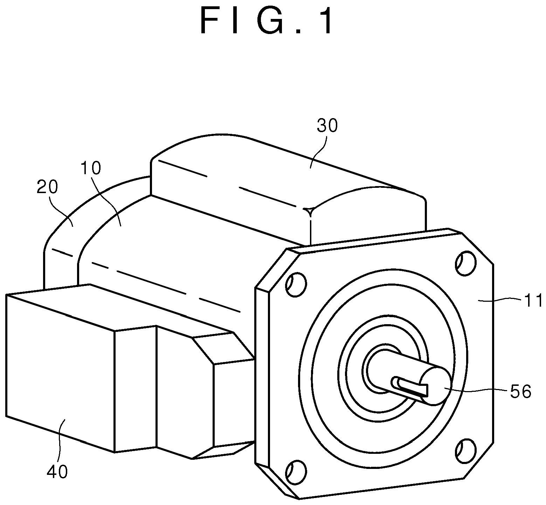

Fig. 1 shows an overall configuration of a rotating electrical machine assembly, for example, for driving an outdoor pump, according to an embodiment of the present invention. In Fig. 1, reference numeral 10 represents a cover of a substantially cylindrical outer shape disposed so as to enclose an outer circumference of the main body of the rotating electrical machine. The cover 10 is formed to a predetermined shape, for example, by press-forming or the like of a sheet-shaped resonance suppression material.

More particularly, noise and vibration can be suppressed by mounting a covering member inside the cover. Although described later, the covering member is preferably made of a sound-absorbing material, a soundproofing material, a vibration-damping material, or a vibration-absorbing material.

A cooling cover 20 housing a centrifugal fan 58 described later is fitted to one end (at the back side of Fig. 1) in an axial direction of the cylindrical cover 10, and an end bracket 11 of a rotating electrical machine described below is fitted to another end thereof (at the front side of Fig.1). Further, a casing 30 (power conversion device casing) housing a power conversion device described later and a terminal box 40 (terminal box with a built-in a noise filter) housing a noise filter therein are mounted on the outer peripheral surface of the cylindrical cover 10, respectively.

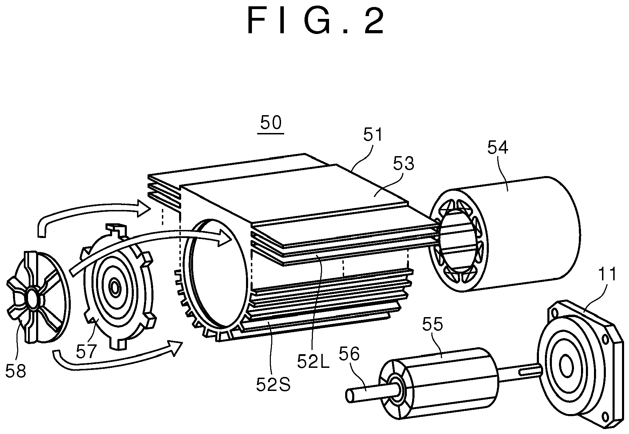

Next, Fig. 2 shows an expansion plan of an overall configuration of a drive section 50 (hereinafter, alternatively referred to as "rotating electrical machine 50") of the rotating electrical machine housed in the cover 10. According to the present embodiment, a permanent magnet rotating electrical machine is shown as an example thereof. In Fig. 2, reference numeral 51 represents a substantially cylindrical housing (alternatively called as "frame"). The housing 51 is formed by pressing a material, for example, such as aluminum having a good heat transfer property (thermal conductivity). Further, the housing 51 has numerous cooling fins 52L, 52S extending in parallel with each other along a cylindrical rotating shaft over the entire outer peripheral surface thereof as shown in Fig. 1. Part (upper part in Fig. 2) of the outer peripheral surface of the housing 51 forms a plane portion 53 of a relatively large area for mounting the power conversion device 30 (that is, the power conversion device casing) mentioned above, and a relatively large (elongating)cooling fin 52L extending in a horizontal direction is formed around the plane.

An armature forming a stator 54 of the permanent magnet rotating electrical machine mentioned above is inserted and fixed inside the cylindrical housing 51, and a rotor 55 comprising a plurality of permanent magnets disposed cylindrically is inserted in a cylindrical inner space of the armature 54 and mounted at predetermined intervals in a rotatable manner. Reference numeral 56 in Fig. 2 represents a rotating shaft (shaft) integrally formed with the rotor 55. The rotating shaft transmits the rotating drive force of the rotating electrical machine, for example, to a driven device such as a pump via the rotating shaft. Reference numeral 57 in Fig. 2 represents an end bracket fitted to an end of the housing 51 on an opposite site of the end bracket 11 mentioned above. Reference numeral 58 in Fig. 2 represents a centrifugal fan (cooling fan) fitted to the rotating shaft 56 outside the end bracket 57.

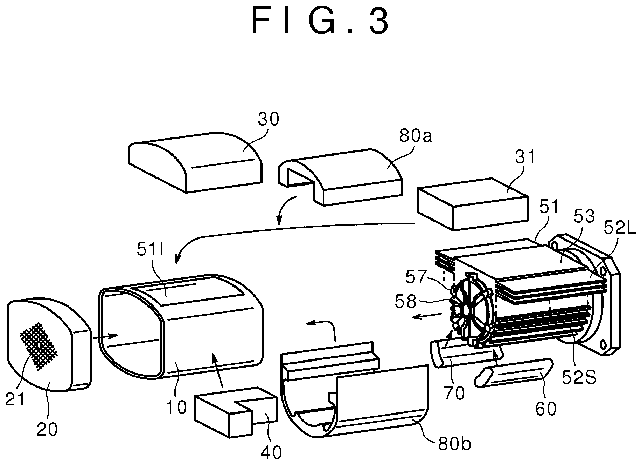

Further, Fig. 3 shows an expansion plan of components of the rotating electrical machine 50 housed in the cover 10 shown in Fig. 1. That is, in the rotating electrical machine 50 a control & I/F substrate casing 60 with an external cross section thereof formed in a substantially arc shape and a smoothing capacitor 70 are fitted (or fixed) to part of an outer peripheral surface of the housing, for example, at a bottom portion of Fig. 3, around which relatively short cooling fins 52 are formed. Thereafter, the rotating electrical machine is inserted into the cover 10 (see arrow). Further, the power conversion device 31 comprising a power switching element (for example, IGBT or the like), a heating element composing an inverter, is fitted to a plane portion 53 on the housing 51 of the rotating electrical machine 50 via an aperture 51l provided at a portion of the cover 10. Thereafter, a cover 30 (cover of the power conversion device) for protection thereof is fitted from the outside (see arrow in Fig. 3).

Further, the cover 10 further houses large and small cooling fins 52 formed at the outer circumference of the housing 51, and the covering member 80 (80a, 80b) disposed so as to fill gaps between a control & I/F substrate casing 60 and a smoothing capacitor 70 fitted inside the cover 10. The covering member 80 is fitted in such a manner that outer circumference thereof covers an inner circumference of the cover 10, and an inner circumference thereof covers a outer circumference of the housing 51 so as to be substantially in contact with a tip of each of the cooling fins 52. As shown in Fig. 3, the covering member 80 according to the present embodiment comprises a covering member 80a disposed between the power conversion device 31 and the power conversion device casing 30, and a covering member 80b covering a outer circumference of the housing 51. With this arrangement, the covering member covers substantially overall circumference of the rotating electrical machine.

Material of the covering member 80 is not specifically limited so far as sufficient sound absorbing and sound proofing effects are ensured, but preferably a material having a heat conductivity lower than the housing 51 and the cover 10, and having a shape conformability. That is, the covering member may be an elastic body or an easily deformable substance such as, for example, a flexible material.

As shown in Fig. 3, the power conversion device 31 is mounted to a plane portion 53 of the housing 51, and the control & I/F substrate casing 60 and the smoothing capacitor casing 70 are mounted so as to contact tips of the cooling fin 52S respectively. Those components are mounted radially relative to the rotating shaft 56 and disposed inside the housing 51 by keeping apart from each other, so that diameter of the rotating electrical machine can be reduced in a compact manner. Space between the cooling fins 52S is covered with casings 60 and 70 which are covered with the covering member 80b, so that a space is formed between cooling fins 52S.

Further, the terminal box 40 (terminal box with a built-in noise filter) is mounted at part of an outer peripheral surface of the housing 51 (see arrow in Fig. 3). The cooling cover 20 is mounted at another end (left end in Fig. 3) of the housing 51. Reference numeral 21 in Fig. 3 shows numerous pores disposed in a meshed manner at a substantially central portion on a wall of the cooling cover 20 to take in outside air.

In the rotating electrical machine assembly comprising the main body of the rotating electrical machine and peripheral devices thereof described above, the rotating shaft 56, which rotates as the rotating electrical machine runs, causes the centrifugal fan 58 fitted to a tip thereof to rotate so as to take outside air into the inside of the cover 10. Outside air flows among numerous cooling fins 52 disposed on the outer peripheral surface of the housing 51 for performing heat exchange (see white arrows in Fig. 2) and thereafter flows out to outside through a gap between the main body and the end bracket 11 at the other end. That is, air flow caused by rotation of the centrifugal fan 58 cools down the housing 51 having numerous cooling fins 52 disposed on the outer peripheral surface thereof.

As described above, the power conversion device 31 forms the inverter and therefore comprises a power switching element generating a heat. Thus, amount of the heat generated therefrom is significant. According to the present embodiment, however, the power conversion device 31 is mounted directly to part of the housing 51 integrally disposed on an outer circumference of the stator 54 or a plane portion 53 for mounting thereof to discharge heat of the rotating electrical machine to outside. With this configuration, heat generated in the power conversion device 31 is transmitted to the housing 51 together with heat generated in the rotating electrical machine (especially, heat generated in an armature thereof) and efficiently transmitted to outside air by numerous cooling fins 52 made of a material having a good heat transfer property and disposed in parallel with each other on an overall outer surface of the housing 51. That is, heat of the power conversion device 31 can be efficiently discharged to outside together with heat of the rotating electrical machine, whereby good cooling effect of the power conversion device can be achieved.

In particular, according to the embodiment mentioned above, cooling fins 52 relatively large in the horizontal direction (elongated) are disposed around the mounting plane 53 arranged on top of the cylindrical housing 51 on which the power conversion device 81 is fitted, so that heat of both the rotating electrical machine and the power conversion device 31 can be efficiently cooled down.

As described above, according to the present embodiment, the control & I/F substrate casing 60 and the capacitor casing 70 are also fitted (fixed) to part of the housing 51. Therefore, heat generated inside those casings also can be efficiently discharged to outside through cooling fins 52 disposed on the circumference of the housing 51, in the same manner as above.

The control & I/F substrate casing 60 contains a controller (for example, a microcomputer for controlling) and a communication I/F substrate and is filled with a resin material or the like to provide good environmental resistance and impact resistance. Further, drive of an outdoor pump and external cable/wireless communication functions also become possible by mounting the control & I/F substrate casing 60 to part of the rotating electrical machine. Further, with this arrangement, for example, pressure and flow rate can be automatically controlled as feedback signals by mounting a pressure sensor, a flow sensor and the like on the control I/F substrate. Further, a central control, an integrated energy saving monitor system, and the like also can be achieved by transmitting (communicating) such feedback signals to a support sensor. That is, the above arrangements enable not only operation control, energy saving operation, and the like of an outdoor pump but also remote supervisory control and central control. Further, systematization of a plurality of pumps also can be achieved.

A capacitor casing 70 is a casing configured to accommodate a smoothing capacitor forming part (a component) of an inverter circuit of the power conversion device 31. Similarly with the above, the casing is filled with a resin material or the like to enhance environmental resistance and impact resistance. According to the present embodiment, the DC reactor forming part of the inverter is incorporated into the power conversion device 31. However, similarly with the smoothing capacitor, a special casing containing the DC reactor may be fitted to part of the outer peripheral surface of the housing 51.

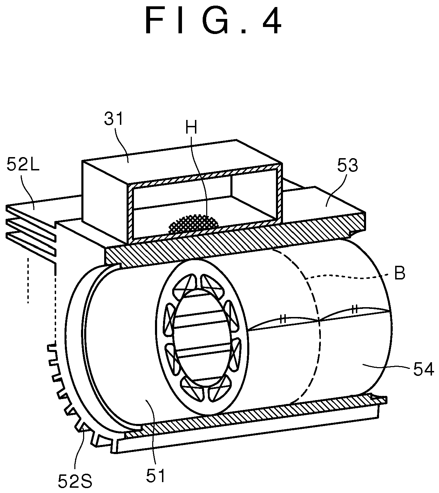

Further, according to the present embodiment, the power conversion device 31 is disposed in a manner different from the above embodiment. For example, as shown in Fig. 4, a heating portion H (meshed portion in Fig. 4) of the power conversion device 31 is disposed on the plane portion 53 of the cylindrical-shaped housing 51, but apart from a center (dashed line shown in Fig. 4) of the stator 54 which is a heating member of the rotating electrical machine on a rotational central axis thereof. For example, the heating portion of the power conversion device 31 is disposed close to the centrifugal fan 21 accommodated in the cooling cover 20. With this arrangement, the heating portions are not concentrated but distributed, whereby efficient cooling can be achieved.

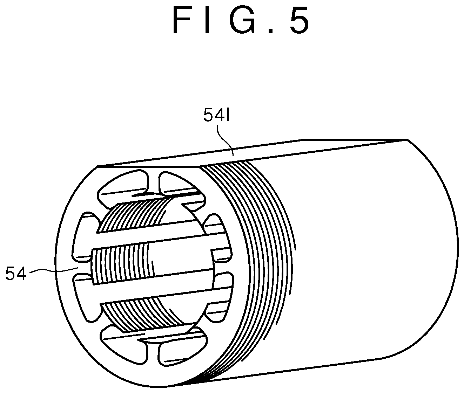

Further, as a stator (armature) 54, a so-called cut-core type may be adopted. As shown in Fig. 5, the cut-core type stator comprises a cut-away portion (cut portion 541) on the outer circumference thereof and close to a plane area of the housing 51 where the power conversion device 30 is mounted. With this configuration, heat sources of the power conversion device 30 and the stator (armature) 54 can be thermally separated from each other by the cut portion, whereby heat absorption into the housing 51 can be separated respectively and thereby efficient cooling can be achieved.

That is, as apparent from the foregoing, the rotating electrical machine assembly according to the present embodiment is capable of providing a rotating electrical machine assembly which is appropriate for practical use and suitable for an integrated configuration comprising a housing with cooling fins disposed on the outer peripheral thereof and directly used as a cooling unit for heating elements such as an inverter, the housing accommodating a power conversion device comprising an inverter, a circuit substrate, and a noise filter and a capacitor.

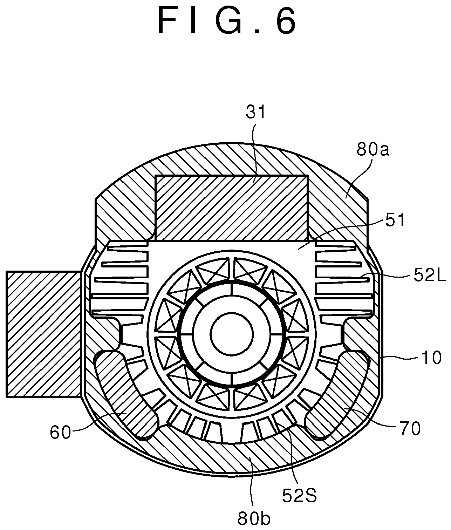

Next, configuration of the covering member 80 arranged inside the cover 10 is described with reference to Fig. 6. Fig. 6 is a cross-section view showing components inside the cover including the housing 51 and inner components of the rotating electrical machine although not shown by hatching. As shown in Fig. 6, the covering member 80 is disposed between the outer circumference of cooling fins formed on the housing and an inner surface of the cover 10. With this configuration, transfer of a noise generated by a motor to outside can be suppressed.

In particular, according to the embodiment mentioned above, cooling fins 52 relatively large in the horizontal direction (elongated) are disposed around the mounting plane 53 arranged on the cylindrical housing 51 on which the power conversion device 31 is fitted, so that heat of both the rotating electrical machine and the power conversion device 31 can be efficiently cooled down.

With the covering member 80 arranged so as to fill up a gap between tips of the large and small cooling fins and the cover 10, part of a cooling air path for the rotating electrical machine in operation can be configured with efficient air ventilation among the fins, whereby a cooling effect can be ensured. That is, with this configuration, a cooling air is effectively introduced into cooling fins 52 provided for heat dissipation, whereby cooling performance can be improved and sufficient cooling effect also can be ensured in the structure covered by the covering member 80.

Even in such a configuration comprising long and short fins 52L and 52S according to the present embodiment, circumference of the configuration can be easily covered using the covering member 80 made of a material having a high shape conformability. Further, the casings 60 and 70 disposed over outer peripheral of the cooling fin 52S allow easy absorption of a length difference between the cooling fins 52S and 52L, and thereby make peripheral covering by the covering member 80 easy. That is, according to the present embodiment, the power conversion device 30 and the casings 60 and 70 are disposed apart from each other in a radial direction from the rotating shaft of the rotating electrical machine as described above. This arrangement allows easy coverage of those components with the covering member 80 and also achieves a compact rotating electrical machine.

Further, although, when installed outdoor, the cover 10 may be heated by direct sun shine or the like due to a dual structure of the rotating electrical machine comprising the cover 10, air flow occurs inside the cover 10 by natural convection and suppresses a temperature rise due to direct sun shine when the rotating electrical machine is stopped. That is, a space as a communication path of the cooling air serves as a natural convection space produced due to a temperature difference between the cover 10 and the housing 51 and thereby provides a heat dissipation effect even when the motor is stopped. Further, the covering member 80 disposed inside the cover 10 is made of a material having low heat conductivity like an insulating material, so that heat transfer from the cover 10 to the housing 51 can be blocked and thereby a temperature rise inside the housing 51 can be suppressed.

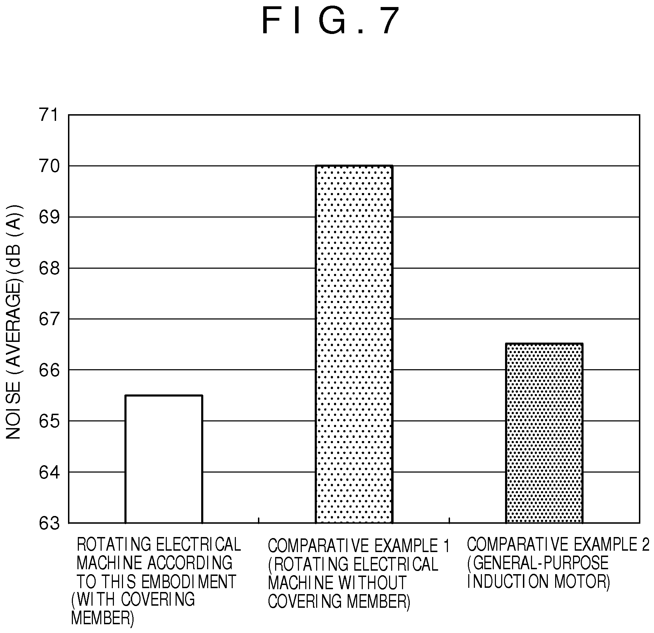

Fig. 7 shows results of a noise test carried out on the covering member 80 according to embodiments of the present invention by applying the same to a real rotating electrical machine together with results of comparative examples. Specification of the real rotating electrical machine includes output of 3.7 (kW) and rotational speed of 3,600 (min-1). Based on the specification, the noise test was carried out with and without the covering member. Results of the noise test shown in Fig. 7 show noise of 70.0 dB (A) for a comparative example 1 having no covering member, and 65.5 dB for the real rotating electrical machine according to the present embodiment. By mounting the covering member, noise generated by a motor, for example, a noise generated by carriers when an inverter is driven, could be suppressed so as not to leak outside. As a result, the present embodiment having the covering member proved to exhibit a noise reduction effect higher than the comparative example having no covering member. Further, even when compared with a general-purpose induction motor (66.5 dB (A)), noise of the rotating electrical machine having a covering member according to the present embodiment was lower than an equivalent level. This proves that the present embodiment provides no adverse effects such as noise increase.

According to the embodiments described above, a rotating electrical machine for driving an outdoor pump comprises a permanent magnet rotating electrical machine. However, the present invention is not limited thereto. It will be apparent to those skilled in the art that the rotating electrical machine for driving an outdoor pump may comprise a rotating electrical machine of the other type, and similar effects can be obtained therefrom.

While the foregoing has described what are considered to be the best mode and/or other examples, it is understood that various modifications may be made therein and that the subject matter discussed herein may be implemented in various forms and examples, and that the teachings may be applied in numerous applications, only some of which have been described herein. The scope of the invention is solely defined in the appended claims.

## Claims

1. A rotating electrical machine (50) comprising:
a housing (51) having a plurality of cooling fins (52L, 52S) formed on a circumference thereof;
a stator (54) fitted to the housing (51);
a rotor (55) fixed to a rotating shaft (56) and configured to rotate by a rotating magnetic field generated by the stator (54) ;
a cooling fan (58) configured to rotate as the rotating shaft (56) rotates;
a cover (10) disposed on an outer circumference of the housing (51); and
a covering member (80) disposed between the cover (10) and the housing (51) so as to cover tips of the plurality of cooling fins (52L, 52S) and thereby form a space between the plurality of cooling fins (52L, 52S), wherein the covering member (80) is made of a material having a heat conductivity lower than those of the housing (51) and the cover (10).

2. The rotating electrical machine (50) according to claim 1, wherein cooling fins (52L) disposed around a planar portion, on which a power conversion device (31) configured to supply drive current to the stator (54) is fitted, are larger than cooling fins (52S) disposed at other sections.

3. The rotating electrical machine (50) according to claim 1, wherein the covering member (80) is made of a material having shape conformability.

4. The rotating electrical machine (50) according to claim 1, further comprising:
a power conversion device (31) fixed to the outer circumference of the housing (51);
a control substrate (60) of the power conversion device (31); and
a smoothing capacitor (70) for the power conversion device (31),
wherein the power conversion device (31), the control substrate (60) and the smoothing capacitor (70) are disposed apart radially from the rotational axis, and
wherein the covering member (80) covers circumferences of the power conversion device (31), the control substrate (60) and the smoothing capacitor (70).

5. The rotating electrical machine (50) according to claim 2, further comprising:
the power conversion device (31) fixed to the outer circumference of the housing (51);
a control substrate (60) of the power conversion device (31); and
a smoothing capacitor (70) for the power conversion device (31),
wherein the power conversion device (31), the control substrate (60) and the smoothing capacitor (70) are disposed apart radially from the rotational axis, and
wherein the covering member (80) covers circumferences of the power conversion device (31), the control substrate (60) and the smoothing capacitor (70).

6. The rotating electrical machine (50) according to claim 3, further comprising:
a power conversion device (31) fixed to the outer circumference of the housing (51);
a control substrate (60) of the power conversion device (31); and
a smoothing capacitor (70) for the power conversion device (31),
wherein the power conversion device (31), the control substrate (60) and the smoothing capacitor (70) are disposed apart radially from the rotational axis, and
wherein the covering member (80) covers circumferences of the power conversion device (31), the control substrate (60) and the smoothing capacitor (70).

7. The rotating electrical machine according to claim 1, wherein the covering member (80) is made of a material that is a vibration-damping material

## Patentansprüche

1. Rotierende elektrische Maschine (50), die Folgendes umfasst:
ein Gehäuse (51) mit einer Vielzahl von Kühlrippen (52L, 52S), die auf einem Umfang davon ausgebildet sind;
einen Stator (54), der an dem Gehäuse (51) angebracht ist;
einen Rotor (55), der an einer Drehwelle (56) angebracht und ausgebildet ist, um durch ein rotierendes Magnetfeld, das durch den Stator (54) erzeugt wird, zu rotieren;
einen Kühllüfter (58), der ausgebildet ist, um zu rotieren, wenn die Drehwelle (56) rotiert;
eine Abdeckung (10), die auf einem Außenumfang des Gehäuses (51) angeordnet ist; und
ein Abdeckelement (80), das zwischen der Abdeckung (10) und dem Gehäuse (51) so angeordnet ist, um Spitzen der Vielzahl von Kühlrippen (52L, 52S) abzudecken und dadurch einen Raum zwischen der Vielzahl von Kühlrippen (52L, 52S) zu bilden, wobei das Abdeckelement (80) aus einem Material besteht, das eine geringere Wärmeleitfähigkeit aufweist als das Gehäuse (51) und die Abdeckung (10).

2. Rotierende elektrische Maschine (50) nach Anspruch 1, wobei die Kühlrippen (52L), die um einen planaren Abschnitt angeordnet sind, auf dem eine Leistungsumwandlungsvorrichtung (31) angebracht ist, die ausgebildet ist, um den Stator (54) mit Antriebsstrom zu versorgen, größer sind als Kühlrippen (52S), die in anderen Abschnitten angeordnet sind.

3. Rotierende elektrische Maschine (50) nach Anspruch 1, wobei das Abdeckelement (80) aus einem Material besteht, das Formanpassungsvermögen aufweist.

4. Rotierende elektrische Maschine (50) nach Anspruch 1, die ferner Folgendes umfasst:
eine Leistungsumwandlungsvorrichtung (31), die an dem Außenumfang des Gehäuses (51) angebracht ist;
ein Steuersubstrat (60) der Leistungsumwandlungsvorrichtung (31) und
einen Glättkondensator (70) für die Leistungsumwandlungsvorrichtung (31),
wobei die Leistungsumwandlungsvorrichtung (31), das Steuersubstrat (60) und der Glättkondensator (70) radial von der Rotationsachse beabstandet angeordnet sind und
wobei das Abdeckelement (80) Umfänge der Leistungsumwandlungsvorrichtung (31), des Steuersubstrats (60) und des Glättkondensators (70) abdeckt.

5. Rotierende elektrische Maschine (50) nach Anspruch 2, die ferner Folgendes umfasst:
die an dem Außenumfang des Gehäuses (51) angebrachte Leistungsumwandlungsvorrichtung (31);
ein Steuersubstrat (60) der Leistungsumwandlungsvorrichtung (31) und
einen Glättkondensator (70) für die Leistungsumwandlungsvorrichtung (31),
wobei die Leistungsumwandlungsvorrichtung (31), das Steuersubstrat (60) und der Glättkondensator (70) radial von der Rotationsachse beabstandet angeordnet sind und
wobei das Abdeckelement (80) Umfänge der Leistungsumwandlungsvorrichtung (31), des Steuersubstrats (60) und des Glättkondensators (70) abdeckt.

6. Rotierende elektrische Maschine (50) nach Anspruch 3, die ferner Folgendes umfasst:
eine Leistungsumwandlungsvorrichtung (31), die an dem Außenumfang des Gehäuses (51) angebracht ist;
ein Steuersubstrat (60) der Leistungsumwandlungsvorrichtung (31) und
einen Glättkondensator (70) für die Leistungsumwandlungsvorrichtung (31),
wobei die Leistungsumwandlungsvorrichtung (31), das Steuersubstrat (60) und der Glättkondensator (70) radial von der Rotationsachse beabstandet angeordnet sind und
wobei das Abdeckelement (80) Umfänge der Leistungsumwandlungsvorrichtung (31), des Steuersubstrats (60) und des Glättkondensators (70) abdeckt.

7. Rotierende elektrische Maschine nach Anspruch 1, wobei das Abdeckelement (80) aus einem Material besteht, das ein schwingungsdämpfendes Material ist.

## Revendications

1. Machine électrique rotative (50) comprenant :
un boîtier (51) ayant une pluralité d'ailettes de refroidissement (52L, 52S) formées sur une circonférence de celui-ci ;
un stator (54) monté sur le boîtier (51) ;
un rotor (55) fixé à un arbre rotatif (56) et configuré pour tourner par un champ magnétique rotatif généré par le stator (54) ;
un ventilateur de refroidissement (58) configuré pour tourner lorsque l'arbre (56) tourne ;
un couvercle (10) disposé sur une circonférence extérieure du boîtier (51) ; et
un élément de recouvrement (80) disposé entre le couvercle (10) et le boîtier (51) de manière à recouvrir les bouts de la pluralité d'ailettes de refroidissement (52L, 52S) et ainsi former un espace entre la pluralité d'ailettes de refroidissement (52L, 52S), dans laquelle l'élément de recouvrement (80) est constitué d'un matériau ayant une conductivité thermique inférieure à celles du boîtier (51) et du couvercle (10).

2. Machine électrique rotative (50) selon la revendication 1, dans laquelle des ailettes de refroidissement (52L) disposées autour d'une partie plane, où est monté un dispositif de conversion de puissance (31) configuré pour fournir un courant d'entraînement au stator (54), sont plus grandes que des ailettes de refroidissement (52S) disposées au niveau d'autres sections.

3. Machine électrique rotative (50) selon la revendication 1, dans laquelle l'élément de recouvrement (80) est constitué d'un matériau ayant une conformabilité de forme.

4. Machine électrique rotative (50) selon la revendication 1, comprenant en outre :
un dispositif de conversion de puissance (31) fixé à la circonférence extérieure du boîtier (51) ;
un substrat de commande (60) du dispositif de conversion de puissance (31) ; et
un condensateur de lissage (70) pour le dispositif de conversion de puissance (31),
dans laquelle le dispositif de conversion de puissance (31), le substrat de commande (60) et le condensateur de lissage (70) sont disposés radialement à distance de l'axe de rotation, et
dans laquelle l'élément de recouvrement (80) couvre des circonférences du dispositif de conversion de puissance (31), du substrat de commande (60) et du condensateur de lissage (70) .

5. Machine électrique rotative (50) selon la revendication 2, comprenant en outre :
le dispositif de conversion de puissance (31) fixé à la circonférence extérieure du boîtier (51) ;
un substrat de commande (60) du dispositif de conversion de puissance (31) ; et
un condensateur de lissage (70) pour le dispositif de conversion de puissance (31),
dans laquelle le dispositif de conversion de puissance (31), le substrat de commande (60) et le condensateur de lissage (70) sont disposés radialement à distance de l'axe de rotation, et
dans laquelle l'élément de recouvrement (80) recouvre des circonférences du dispositif de conversion de puissance (31), du substrat de commande (60) et du condensateur de lissage (70).

6. Machine électrique rotative (50) selon la revendication 3, comprenant en outre :
un dispositif de conversion de puissance (31) fixé à la circonférence extérieure du boîtier (51) ;
un substrat de commande (60) du dispositif de conversion de puissance (31) ; et
un condensateur de lissage (70) pour le dispositif de conversion de puissance (31),
dans laquelle le dispositif de conversion de puissance (31), le substrat de commande (60) et le condensateur de lissage (70) sont disposés radialement à distance de l'axe de rotation, et
dans laquelle l'élément de recouvrement (80) recouvre des circonférences du dispositif de conversion de puissance (31), du substrat de commande (60) et du condensateur de lissage (70).

7. Machine électrique rotative selon la revendication 1,
dans laquelle l'élément de recouvrement (80) est constitué d'un matériau qui est un matériau amortissant les vibrations.
